# EUROPEAN PATENT APPLICATION

(11) **EP 4 715 613 A1**
(43) Date of publication of application: **25.03.2026**
(21) Application number: 25202760.2
(22) Date of filing: 17.09.2025
(51) Int. Cl.: G06F 12/0868, G06F 12/0888, G06F 3/06, G06F 12/0804, G06F 12/0862

(54) **STORAGE DEVICE**

(30) Priority: 23.09.2024 KR 20240128514; 06.11.2024 KR 20240156462
(71) Applicant: Samsung Electronics Co., Ltd., Suwon-si, Gyeonggi-do 16677 (KR)
(72) Inventor: JEONG, Wonseb, 16677 Suwon-si (KR); SONG, Hyunsub, 16677 Suwon-si (KR); WON, Chihun, 16677 Suwon-si (KR); YOO, Younggeon, 16677 Suwon-si (KR); LEE, Donghun, 16677 Suwon-si (KR)
(74) Representative: Marks & Clerk LLP

(57) **Abstract**

A storage device includes non-volatile memory and a storage controller configured to read read data from the non-volatile memory and to write the read data to a memory device. The storage controller includes a management circuit configured to cache the read data in cache memory in a host device by using a cache coherence protocol.

## Description

### BACKGROUND

The inventive concept relates to a storage device caching read data in cache memory in a host device by using a cache coherence protocol.

Recently, storage devices including non-volatile memory such as solid state drives (SSDs) have been widely used. Storage devices are useful for storing or moving large amounts of data.

When a storage device receives a read command from a host device, the storage device may read read data corresponding to the read command from internal non-volatile memory and may provide the read data to the host device. At this time, various methods are being developed to quickly provide data from the storage device to the host device for rapid data processing.

### SUMMARY

The inventive concept relates to a storage device allowing a host device to obtain read data with low latency.

According to an aspect of the inventive concept, there is provided a storage device including non-volatile memory and a storage controller configured to read read data from the non-volatile memory and to write the read data to a memory device. The storage controller includes a management circuit configured to cache the read data in cache memory in a host device by using a cache coherence protocol.

According to another aspect of the inventive concept, there is provided a storage device including non-volatile memory and a storage controller configured to process a cache read command issued by a host device and to write a completion indicating a processing result of the cache read command to an external memory device. The storage controller includes a management circuit configured to cache the completion in cache memory in the host device by using a cache coherence protocol.

According to another aspect of the inventive concept, there is provided a storage device including non-volatile memory, a storage controller configured to read read data from the non-volatile memory, and buffer memory including a data buffer to which the read data is written. The storage controller includes a management circuit configured to cache the read data in cache memory in a host device by using a cache coherence protocol.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram illustrating an electronic device including a storage device according to an example embodiment;
FIG. 2 is a block diagram illustrating a detailed structure of a storage device according to an example embodiment;
FIG. 3 is a diagram illustrating an example of a read data transmission operation of a storage device, according to an example embodiment;
FIG. 4 is a diagram illustrating an example of a completion transmission operation of a storage device according to an example embodiment;
FIG. 5 is a diagram illustrating another example of a read data transmission operation of a storage device, according to an example embodiment;
FIG. 6 is a diagram illustrating another example of a completion transmission operation of a storage device according to an example embodiment;
FIG. 7 is a diagram illustrating an example of a cache read command received by a storage device according to an example embodiment;
FIG. 8 is a diagram illustrating a method of a storage device caching at least part of read data based on a cache read command according to an example embodiment;
FIG. 9 is a flowchart illustrating a method of a storage device operating according to a value of a flag field, according to an example embodiment;
FIG. 10 is a flowchart illustrating a method of operating an electronic device including a storage device, according to an example embodiment; and
FIG. 11 is a diagram illustrating a system to which a storage device according to an example embodiment is applied.

### DETAILED DESCRIPTION OF THE EMBODIMENTS

Hereinafter, embodiments of the inventive concept will be described in detail with reference to the accompanying drawings. Like reference characters refer to like elements throughout.

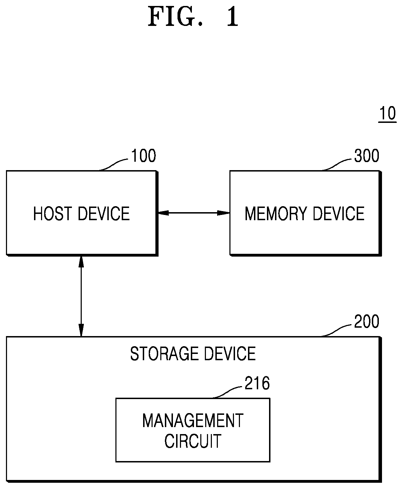

FIG. 1 is a block diagram illustrating an electronic device 10 according to an embodiment.

Referring to FIG. 1, the electronic device 10 according to an embodiment may include a host device 100, a storage device 200, and a memory device 300.

In an example embodiment, the electronic device 10 may be implemented as a personal computer (PC), a data server, an ultra mobile PC (UMPC), a workstation, a netbook, a network-attached storage (NAS), a smart television, an Internet of things (IoT) device, an automobile, or a portable electronic device. The portable electronic device may include a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, or a wearable device.

The host device 100 may control overall operations of the electronic device 10. In an embodiment, the host device 100 may include a processor core such as a central processing unit (CPU) or an application processor (AP) configured to control the electronic device 10, or a computing node connected through a network.

The host device 100 may store data in the storage device 200 or may read data stored in the storage device 200. The host device 100 may generate a write command or a read command for data.

In order to store data in the storage device 200, the host device 100 may write write data to be written to the storage device 200 to the memory device 300, and may write a write command for instructing to write data from the memory device 300 to the storage device 200. The memory device 200 may act as random access memory (RAM).

In order to read data stored in the storage device 200, the host device 100 may write a read command for instructing to read the data stored in the storage device 200 to the memory device 300.

The host device 100 may read a completion indicating a processing result of the command from the memory device 300.

The host device 100 may communicate with the storage device 200 through various interfaces. In an embodiment, the host device 100 may communicate with the storage device 200 through an interface supporting a cache coherence protocol. For example, the cache coherence protocol may include a compute express link (CXL) protocol. A cache coherence protocol may be a protocol that ensures data consistency across multiple caches in a system by defining rules for how caches share, update, and invalidate data.

The storage device 200 may include storage media storing data according to a command from the host device 100. The storage device 200 may be implemented as one of various types of devices. For example, the storage device 200 may be implemented as one of various types of devices such as an eMMC, an MMC, a solid state drive (SSD), a universal flash storage (UFS), an embedded UFS (eUFS), a reduced size-multi-media card (RS-MMC), a multi-media card in micro-MMC format, a compact flash (CF) card, an SD card, a micro-SD card, a mini-SD card, an extreme digital (xD) card, a smart media card, and a memory stick.

The storage device 200 may perform an operation corresponding to a write command or a read command generated by the host device 100. The storage device 200 may obtain a write command or a read command generated by the host device 100 by reading the write command or the read command from the memory device 300.

When the command obtained from the memory device 300 is the write command, the storage device 200 may obtain the write data generated by the host device 100 by reading the write data corresponding to the write command from the memory device 300. The storage device 200 may store the write data.

When the command obtained from the memory device 300 is the read command, the storage device 200 may internally search for read data corresponding to the read command and may write the read data to the memory device 300.

The storage device 200 may generate a completion corresponding to the executed command and may write the generated completion to the memory device 300.

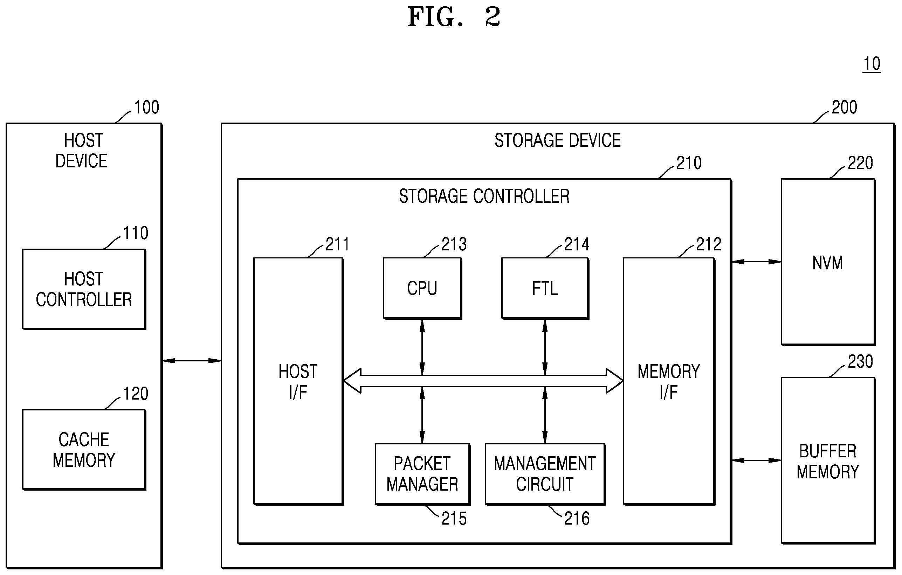

In an embodiment, the storage device 200 may include a management circuit 216. The management circuit 216 may be implemented by using hardware, firmware, software logic, or a combination thereof. The storage device 200 may cache the read data in cache memory in the host device 100 through the management circuit 216 by using the cache coherence protocol. In addition, the storage device 200 may cache the completion in the cache memory in the host device 100 through the management circuit 216 by using the cache coherence protocol. In this way, because the storage device 200 caches the read data or the completion in the cache memory in the host device 100 by using the cache coherence protocol, the host device 100 may obtain the read data with low latency. More detailed structures and operations of the host device 100 and the storage device 200 will be described below with reference to FIG. 2.

The memory device 300 may store a command generated by the host device 100. In addition, the memory device 300 may store data to be written to the storage device 200 or data read from the storage device 200. In addition, the memory device 300 may store a command to be transmitted from the host device 100 to the storage device 200. In addition, the memory device 300 may store a completion corresponding to the command.

The memory device 300 may include volatile memory such as static random access memory (SRAM) or dynamic random access memory (DRAM). However, the inventive concept is not limited thereto, and the memory device 300 may include any type of memory that the host device 100 may access, for example, non-volatile memory such as flash memory, phase-change random access memory (PRAM), magnetic random access memory (MRAM), or ferroelectric random access memory (FeRAM).

FIG. 2 is a block diagram illustrating a detailed structure of a storage device 200 according to an example embodiment.

Referring to FIG. 2, an electronic device 10 (otherwise known as an electronic system) according to an embodiment may include a host device 100 and the storage device 200. In addition, although not illustrated in FIG. 2, the electronic device 10 according to an embodiment may further include a memory device 300.

In an embodiment, the host device 100 may include a host controller 110 and cache memory 120. The host controller 110 may control overall operations of the host device 100.

The host controller 110 may generate a write command or a read command for data and may store the generated write or read command in a submission queue of the memory device 300. At this time, when the command generated by the host controller 110 is a write command, the host controller 110 may store write data corresponding to the write command in a data buffer of the memory device 300.

The host controller 110 may read a completion from a completion queue of the memory device 300. The host controller 110 may check a processing result of the write command or the read command through a completion. At this time, the host controller 110 may perform pooling on the completion queue of the memory device 300 to check whether the completion corresponding to the write command or the read command is written to the completion queue.

When the completion corresponding to the read command is written to the completion queue of the memory device 300, the host controller 110 may obtain read data from the data buffer of the memory device 300. At this time, because the host controller 110 must access the memory device 300 outside the host device 100 in order to obtain the completion corresponding to the read command and the read data, latency may occur in accessing the memory device 300 outside the host device 100.

The cache memory 120 may temporarily store data used by the host controller 110.

In an embodiment, the cache memory 120 may temporarily store read data generated by a storage controller 210 of the storage device 200. At this time, a management circuit 216 included in the storage controller 210 may cache the read data in the cache memory 120 by using the cache coherence protocol so that the read data may be temporarily stored in the cache memory 120.

In an embodiment, the cache memory 120 may temporarily store a completion generated by the storage controller 210 of the storage device 200. At this time, the management circuit 216 included in the storage controller 210 may cache the completion in the cache memory 120 by using the cache coherence protocol so that the read data may be temporarily stored in the cache memory 120.

The storage device 200 according to an embodiment may include the storage controller 210 and non-volatile memory (NVM) 220. In addition, the storage device 200 according to an embodiment may further include buffer memory 230.

The NVM 220 may store data, output stored data, or erase stored data under control by the storage controller 210. In an embodiment, the NVM 220 may include a two-dimensional (2D) or three-dimensional (3D) NAND flash memory device. However, the inventive concept is not limited thereto, and the NVM 220 may include a memory device based on magnetic RAM (MRAM), spin-transfer torque MRAM, conductive bridging RAM (CBRAM), ferroelectric RAM (FeRAM), phase-change RAM (PRAM), resistive RAM (RRAM), and other various types of memory.

The storage controller 210 may control overall operations of the storage device 200. The storage controller 210 may fetch a command written by the host device 100 from the submission queue of the memory device 300. The storage controller 210 may perform an operation corresponding to the fetched command, and may write a completion indicating a processing result of the fetched command to the completion queue of the memory device 300.

In an embodiment, when the command fetched by the storage controller 210 is a write command, the storage controller 210 may fetch write data from the data buffer of the memory device 300 and may store the fetched write data in the NVM 220. Next, the storage controller 210 may write a completion indicating a processing result of the write command to the completion queue of the memory device 300.

In an embodiment, when the command fetched by the storage controller 210 is a read command, the storage controller 210 may read read data from the NVM 220 and may write the read data to the data buffer of the memory device 300. Next, the storage controller 210 may write a completion indicating a processing result of the read command to the completion queue of the memory device 300.

The storage controller 210 may include a host interface (I/F) 211, a memory interface 212, a CPU 213, a flash translation layer (FTL) 214, a packet manager 215, and the management circuit 216.

The host interface 211 may communicate with the host device 100 according to a predetermined interface protocol. In an embodiment, the predetermined interface protocol may include at least one of various interface protocols such as an advanced technology attachment (ATA) interface, a serial ATA (SATA) interface, an external SATA (e-SATA) interface, a small computer small interface (SCSI) interface, a serial attached SCSI (SAS) interface, a peripheral component interconnection (PCI) interface, a PCI express (PCIe) interface, an NVM express (NVMe) interface, IEEE 1394, a universal serial bus (USB) interface, a secure digital (SD) card interface, a multi-media card (MMC) interface, an eMMC interface, a UFS interface, an embedded universal flash storage (eUFS) interface, a CF card interface, and a network interface. The host interface 211 may receive a signal based on a predetermined interface protocol from the host device 100 and may operate based on the received signal.

In an embodiment, the host interface 211 may communicate with the storage device 200 through an interface supporting the cache coherence protocol. For example, the cache coherence protocol may include the CXL protocol. For example, the CXL protocol may include the cache coherence protocol.

The memory interface 212 may communicate with the NVM 220 according to a predetermined interface protocol. In an embodiment, the predetermined interface protocol may include at least one of various interface protocols such as a toggle interface and an open NAND flash interface (ONFI). In an embodiment, the memory interface 212 may communicate with the NVM 220 based on the toggle interface. In this case, the memory interface 212 may communicate with the NVM 220 through a plurality of channels. In an embodiment, each of the plurality of channels may include a plurality of signal lines configured to transmit various control signals (for example, /CE, CLE, ALE, /WE, /RE, and R/B), data signals DQ, and data strobe signals DQS.

The CPU 213 may control overall operations of the storage controller 210. The FTL 214 may perform various operations to efficiently use the NVM 220. For example, the FTL 214 may manage address mapping between logical addresses from the host device 100 and physical page addresses of the storage device 200.

The FTL 214 may perform a wear leveling operation to prevent excessive deterioration of a specific memory block among memory blocks (or blocks) of the NVM 220. The lifespan of the NVM 220 may be increased by the wear leveling operation of the FTL 214. The FTL 214 may secure a free memory block by performing a garbage collection on the NVM 220.

The packet manager 215 may generate a packet according to a protocol of an interface negotiated with the host device 100 or may parse various types of information from the packet received from the host device 100.

The management circuit 216 may perform an operation of caching data or a completion in the cache memory 120 of the host device 100 by using the cache coherence protocol.

In an embodiment, the management circuit 216 may cache read data in the cache memory 120 in the host device 100 by using the cache coherence protocol.

In an embodiment, the management circuit 216 may identify an address of the data buffer in which the read data is stored in the memory device 300 immediately after initialization. Next, the management circuit 216 may cache the read data to be written to the data buffer in the cache memory 120. For example, when the storage controller 210 writes the read data to the memory device 300, the management circuit 216 may cache the read data in the cache memory 120 by using the cache coherence protocol.

In an embodiment, when the command fetched from the memory device 300 is a cache read command, the management circuit 216 may cache the read data in the cache memory 120 by using the cache coherence protocol.

The cache read command may include a command similar to the read command, or a command instructing the cache memory 120 to cache the read data and the completion by using the cache coherence protocol. The management circuit 216 may cache the read data read from the NVM 220 in the cache memory 120 by using the cache coherence protocol according to the cache read command.

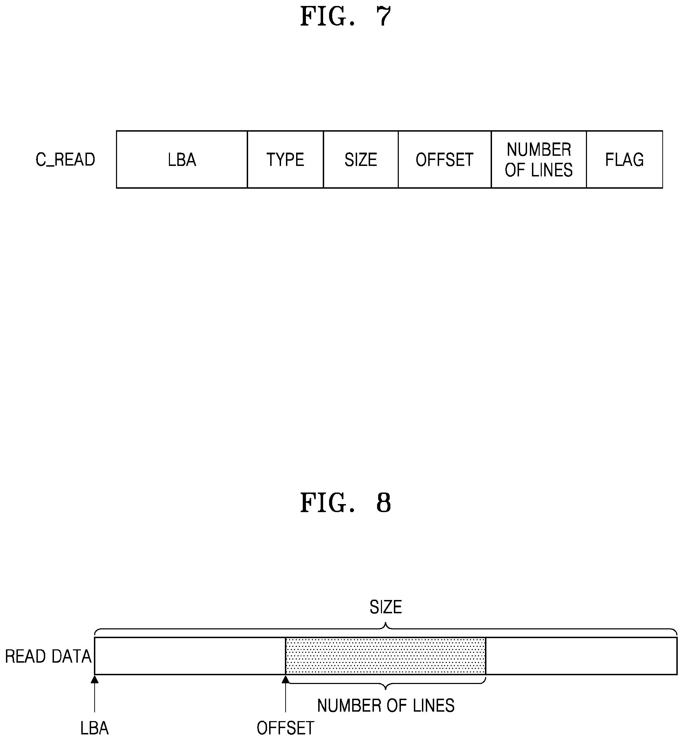

An example and a related operation of the cache read command will be described below with reference to FIG. 7.

In an embodiment, the management circuit 216 may cache the completion in the cache memory 120 in the host device 100 by using the cache coherence protocol.

In an embodiment, the management circuit 216 may identify an address of the completion queue in which the completion is stored in the memory device 300 immediately after initialization. Next, the management circuit 216 may cache the completion to be written to the completion queue in the cache memory 120. For example, when the storage controller 210 writes the completion to the memory device 300, the management circuit 216 may cache the completion in the cache memory 120 by using the cache coherence protocol.

In an embodiment, the management circuit 216 may process the cache read command and may cache a completion indicating a processing result of the cache read command in the cache memory 120 by using the cache coherence protocol. The management circuit 216 may cache the read data in the cache memory 120 according to the cache read command, and then may cache the completion indicating the processing result of the cache read command to the cache memory 120 by using the cache coherence protocol.

As described above, when the management circuit 216 caches the read data and the completion in the cache memory 120 in the host device 100 by using the cache coherence protocol, the host controller 110 may obtain the completion and the read data when accessing the cache memory 120. Compared to the host controller 110 accessing the memory device 300 outside the host device 100 to obtain the completion and the read data, because the host controller 110 obtains the completion and the read data in the host device 100, the read data and the completion may be obtained with low latency. In this way, because the storage device 200 caches the read data and the completion in the cache memory 120 in the host device 100 by using the cache coherence protocol, the host device 100 may obtain the read data with low latency.

The buffer memory 230 may be used by the host device 100 together with the memory device 300. For example, the buffer memory 230 may include host-managed device memory (HDM) of CXL. The buffer memory 230 is included in the storage device 200, but may be used by the host device 100 in the same manner as the memory device 300.

The buffer memory 230 may store a command generated by the host device 100. In addition, the buffer memory 230 may store data to be written to the storage device 200 or data read from the storage device 200. In addition, the buffer memory 230 may store a command to be transmitted from the host device 100 to the storage device 200. In addition, the buffer memory 230 may store a completion corresponding to the command.

The buffer memory 230 may include a data buffer in which read data is stored. In an embodiment, the management circuit 216 may identify an address of the data buffer in the buffer memory 230 and may cache read data to be written to the data buffer in the cache memory 120.

The buffer memory 230 may include a completion queue in which a completion is stored. In an embodiment, the management circuit 216 may identify an address of the completion queue in the buffer memory 230 and may cache a completion to be written to the data buffer in the cache memory 120.

In an embodiment, when the command fetched from the buffer memory 230 is the cache read command, the management circuit 216 may cache the read data in the cache memory 120 by using the cache coherence protocol, and may cache the completion indicating the processing result of the cache read command in the cache memory 120 by using the cache coherence protocol.

As described above, when the buffer memory 230 is used by the host device 100 together with the memory device 300, because the host device 100 obtains the completion and the read data in the host device 100, the read data and the completion may be obtained with low latency.

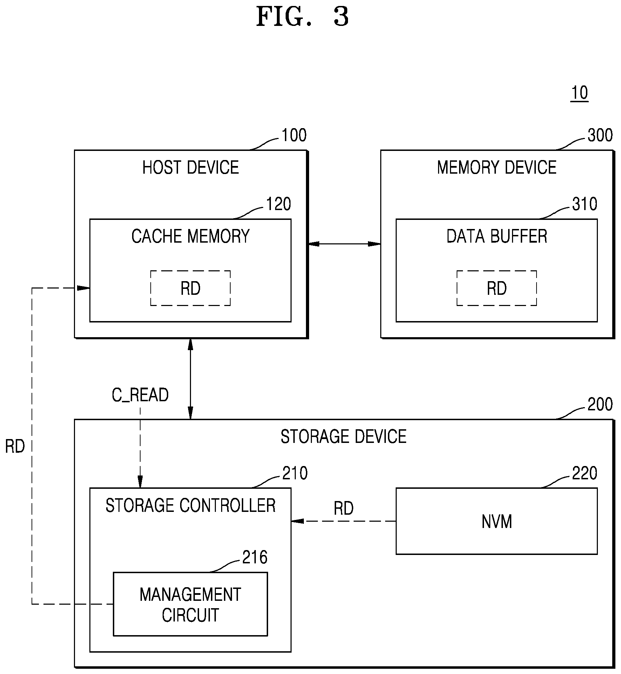

FIG. 3 is a diagram illustrating an example of a read data transmission operation of a storage device, according to an example embodiment.

Referring to FIG. 3, movement of read data RD by the storage device 200 may be checked according to a cache read command C_READ generated by the host device 100.

First, the storage device 200 may obtain the cache read command C_READ. At this time, the storage device 200 may fetch the cache read command C_READ from the submission queue of the memory device 300.

The storage controller 210 of the storage device 200 may read the read data RD from NVM 220 according to the cache read command C_READ. For example, the storage controller 210 of the storage device 200 may read the read data RD from NVM 220 in response to the cache read command C_READ.

Next, the storage controller 210 may cache the read data RD in the cache memory 120 in the host device 100 through the management circuit 216. At this time, the management circuit 216 may cache the read data RD in the cache memory 120 by using the cache coherence protocol. At this time, the read data RD cached in the cache memory 120 may be transmitted from the cache memory 120 to the data buffer 310. For example, the read data RD cached in the cache memory 120 may be evicted when other data is written to a space in which the read data RD is stored in the cache memory 120, and the evicted read data RD may be updated in the data buffer 310. For instance, previously cached read data may be written to the data buffer 310 when new data is to be cached in the cache memory 120 at the same location in the cache 120 as the previously cached read data. The previously cached read data may be overwritten in the cache 120 by the new data.

In an embodiment, the storage controller 210 may cache at least part of the read data RD in the cache memory 120 through the management circuit 216. At this time, a portion of the read data RD that is cached in the cache memory 120 may be determined based on a value of an offset field and a value of a number of lines field included in the cache read command C_READ as described below.

At this time, the remaining portion of the read data RD that is not cached in the cache memory 120 may be stored in the data buffer 310. The storage controller 210 may write the read data RD to the data buffer 310 in a direct memory access (DMA) manner through the management circuit 216.

In one example, the management circuit 216 may write only the remaining portion of the read data RD that is not cached in the cache memory 120 to the data buffer 310. In another example, the management circuit 216 may write the entire read data RD including the remaining portion of the read data RD that is not cached in the cache memory 120 to the data buffer 310.

In this way, the read data RD is cached in the cache memory 120 in the host device 100 through the management circuit 216, thereby reducing access latency for the read data RD of the host device 100.

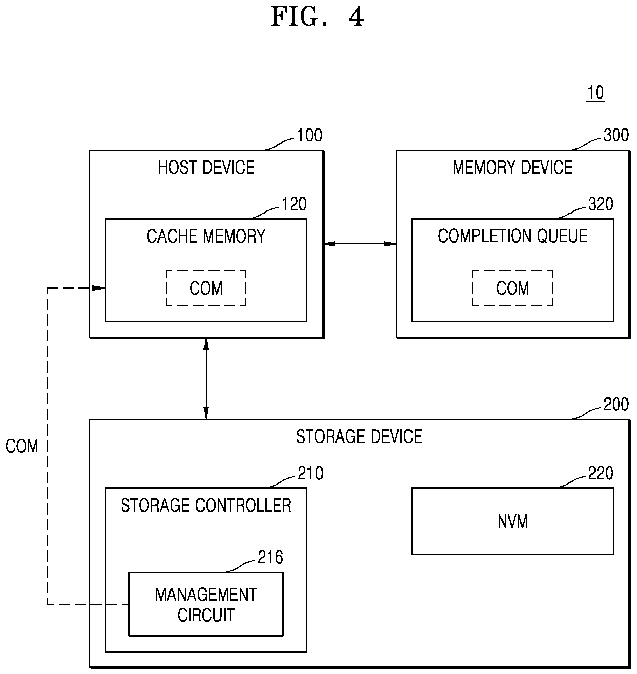

FIG. 4 is a diagram illustrating an example of a completion transmission operation of a storage device according to an example embodiment.

Referring to FIG. 4, movement of the completion COM may be checked after the read data RD is cached in the cache memory 120 as the cache read command C_READ is received as illustrated in FIG. 3.

The storage controller 210 may cache the read data RD in the cache memory 120, and then may generate the completion COM indicating the processing result of the cache read command C_READ. The completion COM may indicate a completion of caching of at least a portion of the read data in cache memory 120.

Next, the storage controller 210 may cache the completion COM in the cache memory 120 in the host device 100 through the management circuit 216. At this time, the management circuit 216 may cache the completion COM in the cache memory 120 by using the cache coherence protocol. At this time, the completion COM cached in the cache memory 120 may be transmitted from the cache memory 120 to the completion queue 320. For example, the completion COM cached in the cache memory 120 may be evicted when other data is written to a space in which the completion COM is stored in the cache memory 120, and the evicted completion COM may be updated in the completion queue 320. For instance, a previously cached completion may be written to the data buffer 310 when new data is to be cached in the cache memory 120 at the same location in the cache 120 as the previously cached completion. The previously cached completion may be overwritten in the cache 120 by the new data.

In this way, the completion COM is cached in the cache memory 120 in the host device 100 through the management circuit 216, thereby reducing access latency for the completion COM of the host device 100.

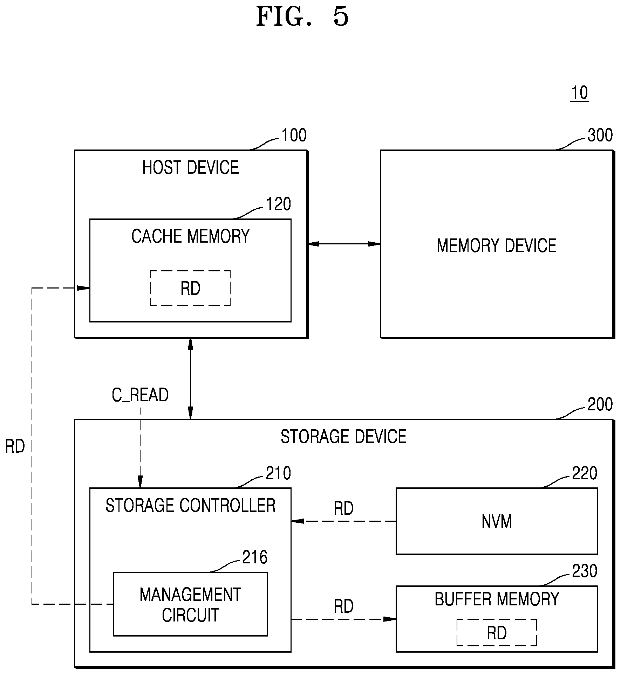

FIG. 5 is a diagram illustrating another example of a read data transmission operation of a storage device, according to an example embodiment.

Referring to FIG. 5, unlike in FIG. 3, when the host device 100 uses the buffer memory 230 together with the memory device 300, the movement of the read data RD by the storage device 200 according to the cache read command C_READ generated by the host device 100 may be checked.

Unlike in FIG. 3, the storage controller 210 may write the read data RD to the buffer memory 230 in the storage device 200.

At this time, the storage controller 210 may cache the read data RD in the cache memory 120 in the host device 100 through the management circuit 216 as illustrated in FIG. 3. At this time, the management circuit 216 may cache the read data RD in the cache memory 120 by using the cache coherence protocol.

Accordingly, even when the host device 100 uses the buffer memory 230 together with the memory device 300, the access latency for the read data RD of the host device 100 may be reduced.

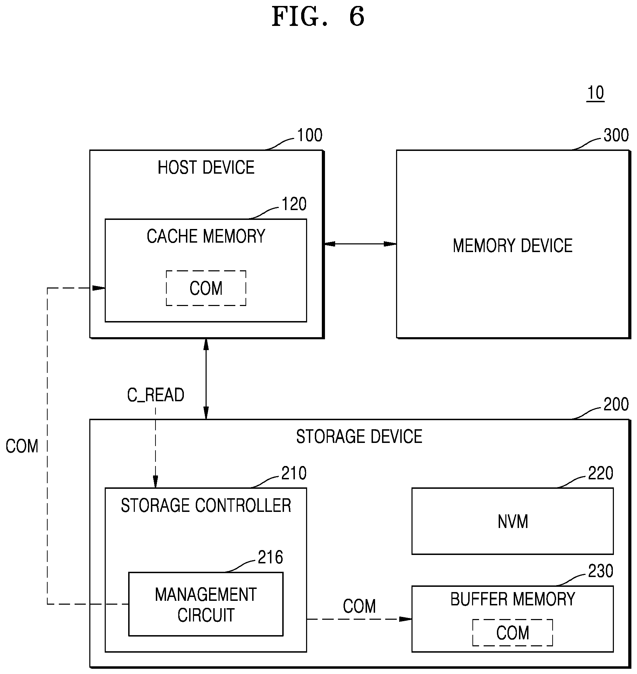

FIG. 6 is a diagram illustrating another example of a completion transmission operation of a storage device according to an embodiment.

Referring to FIG. 6, unlike in FIG. 4, when the host device 100 uses the buffer memory 230 together with the memory device 300, the movement of the completion COM may be checked after the read data RD is cached in the cache memory 120 as the cache read command C_READ is received.

At this time, the storage controller 210 may cache the completion COM in the cache memory 120 in the host device 100 through the management circuit 216 as illustrated in FIG. 4. At this time, the management circuit 216 may cache the completion COM in the cache memory 120 by using the cache coherence protocol.

However, unlike in FIG. 4, the storage controller 210 may write the completion COM to the buffer memory 230 in the storage device 200.

Accordingly, even when the host device 100 uses the buffer memory 230 together with the memory device 300, the access latency for the completion COM of the host device 100 may be reduced.

FIG. 7 is a diagram illustrating an example of a cache read command received by a storage device according to an example embodiment.

Referring to FIG. 7, the cache read command C_READ received by the storage device 200 according to an embodiment may include a logical block address (LBA) field, a type field, a size field, an offset field, and a number of lines field. In addition, the cache read command C_READ received by the storage device 200 according to an embodiment may further include a flag field.

The LBA field may indicate an LBA in which read data to be read according to the cache read command C_READ is stored in the NVM 220 of the storage device 200.

The type field may indicate the type of command. The type field may indicate that the command received from the host device 100 is the cache read command C_READ.

The size field may indicate the size of data to be read according to the cache read command C_READ.

In an embodiment, when the storage device 200 determines that the command received from the host device 100 is the cache read command C_READ based on the type field, the storage device 200 may read the read data from the NVM 220 of the storage device 200 based on the LBA field and the size field.

The offset field may indicate a start of a portion of the read data read according to the cache read command C_READ to be stored in the cache memory 120 of the host device 100.

The number of lines field may indicate the number of lines of data to be stored in the cache memory 120 of the host device 100 from the start indicated by the offset field among the read data read according to the cache read command C_READ.

In an embodiment, when the management circuit 216 of the storage device 200 determines that the command received from the host device 100 is the cache read command C_READ, data to be cached in the cache memory 120 may be selected among the read data based on the value of the offset field and the value of the number of lines field included in the cache read command C_READ.

In the above-described embodiments of FIGS. 3 and 5, when caching the read data RD in the cache memory 120, the management circuit 216 may cache at least part of the read data RD in the cache memory 120 based on the value of the offset field and the value of the number of lines field. In this way, only part of the read data RD is cached in the cache memory 120 by the value of the offset field and the value of the number of lines field, thereby reducing the time for caching the read data RD in the cache memory 120.

The flag field may indicate a time point at which the storage controller 210 caches the completion COM in the cache memory 120. In more detail, the flag field may indicate whether the time point at which the completion COM is cached in the cache memory 120 is after the entire read data RD is stored in the buffer memory 230, or after at least part of the read data RD set based on the offset field and the number of lines field is cached in the cache memory 120. For instance, the flag field may indicate whether the time point at which the completion COM is cached in the cache memory 120 is after the entire read data RD is stored in the buffer memory 230, or after the portion of the read data indicated by the value of the offset field and the value of the number of lines field has been cached in the cache memory 120.

When the flag field indicates that the time point at which the completion COM is cached in the cache memory 120 is after at least part of the read data RD is cached in the cache memory 120 (e.g., after the portion indicated by the value of the offset field and the value of the number of lines field has been cached in the cache memory 120), the storage controller 210 may cache the completion COM in the cache memory 120 after at least part of the read data RD is cached in the cache memory 120. At this time, because the host device 100 may receive the completion COM in a state in which only at least part of the read data RD set based on the offset field and the number of lines field, not the entire read data RD, is cached in the cache memory 120, at least part of the necessary read data RD may be obtained more quickly.

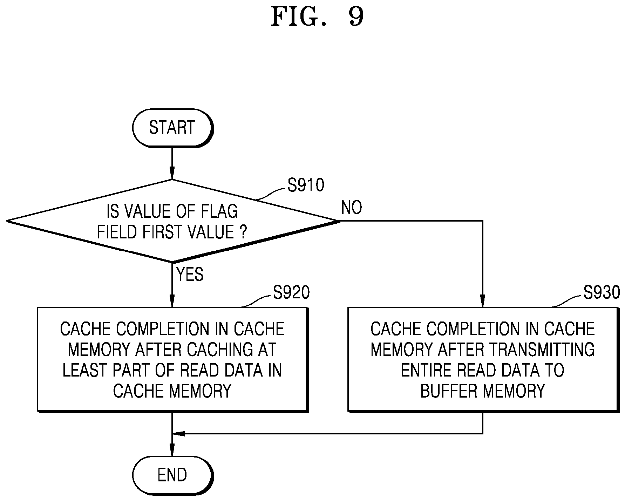

An example of the operation of the management circuit 126 according to the value of the flag field will be described below with reference to FIG. 9.

FIG. 8 is a diagram illustrating a method of a storage device caching at least part of read data based on a cache read command according to an example embodiment.

Referring to FIG. 8, an example of the read data read according to the cache read command may be checked.

The read data may have a size indicated by the size field of the cache read command from an LBA indicated by the LBA field of the cache read command.

In an embodiment, only at least part of the read data, not all, may be cached in the cache memory 120 according to the value of the offset field and the value of the number of lines field. In the embodiment of FIG. 8, the management circuit 126 may cache only a portion of the read data (a portion indicated by gray shading in FIG. 8) corresponding to the number of lines indicated by the number of lines field of the cache read command from a portion of the read data away from the LBA by an offset value indicated by the offset field of the cache read command. In this context, a "line" of data may be a predefined unit size of data. A line may be otherwise known as a data block. For instance, a line of data may refer to a "cache line" of data, which might be a (e.g., minimum) unit of data that can be written to or accessed from a cache.

FIG. 9 is a flowchart illustrating a method of a storage device operating according to a value of a flag field, according to an example embodiment.

Referring to FIG. 9, a flowchart illustrating the operation of the management circuit 126 according to the value of the flag field may be checked.

In operation S910, the management circuit 216 of the storage device 200 may check whether the value of the flag field is a first value (for example, logic 1).

When the value of the flag field is the first value (S910, Yes), the process proceeds to operation S920 and the management circuit 216 may cache the completion COM in the cache memory 120 after at least part of the read data RD is cached in the cache memory 120. That is, the management circuit 216 may cache at least part of the read data selected based on the value of the offset field and the value of the number of lines field included in the cache read command in the cache memory 120 by using the cache coherence protocol, and then may cache the completion COM in the cache memory 120.

Conversely, when the value of the flag field is not the first value but a second value (for example, logic 0) (S910, No), the process proceeds to operation S930 and the management circuit 216 may cache the completion COM in the cache memory 120 after the entire read data RD is stored in the buffer memory 230.

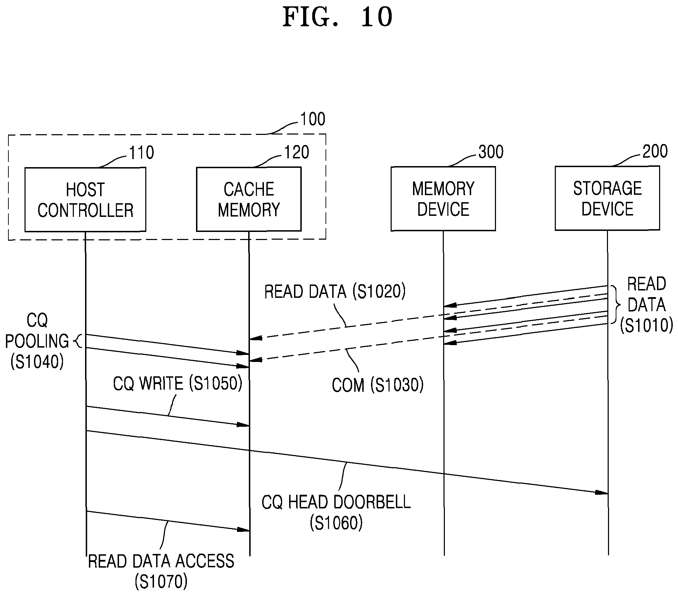

FIG. 10 is a flowchart illustrating a method of operating an electronic device including a storage device according to an example embodiment.

Referring to FIG. 10, operations among the host controller 110, the cache memory 120, the storage device 200, and the memory device 300 may be checked upon receiving the cache read command.

In operation S1010, the storage device 200 may transmit read data to the memory device 300. At this time, the storage device 200 may write the read data to the data buffer 310 of the memory device 300.

Simultaneously with the operation S1010, in operation S1020, the storage device 200 may transmit the read data to the cache memory 120. At this time, the storage device 200 may cache the read data in the cache memory 120. At this time, because only at least part of the read data may be cached in the cache memory 120 according to the value of the offset field and the value of the number of lines field of the cache read command, operation S1020 may be terminated faster than operation S1010.

After operation S1020 ends, in operation S1030, the storage device 200 may cache the completion indicating the processing result of the cache read command in the cache memory 120. The completion may indicate that at least a portion of the read data has been cached in the cache memory 120.

At this time, the host controller 110 may perform a completion queue (CQ) pooling operation to check whether the completion is cached in the cache memory 120, as in operation S1040. At this time, the host controller 110 checks whether the completion is cached in the cache memory 120 inside the host device 100, thereby reducing latency compared to checking whether the completion is written to the memory device 300 outside the host device 100.

When it is determined in operation S1040 that the completion is cached, in operation S1050, the host controller 110 may notify the cache memory 120 that the completion is cached by performing a completion queue write operation.

Next, in operation S1060, the host controller 110 may notify the storage device 200 that the completion is cached by performing a completion queue head doorbell operation.

Finally, in operation S1070, the host controller 110 may access the read data cached in the cache memory 120. At this time, the host controller 110 accesses the read data cached in the cache memory 120 inside the host device 100, thereby reducing latency compared to accessing the read data written to the memory device 300 outside the host device 100. Any read data not stored in the cache memory 120 may be accessed from the memory device 300.

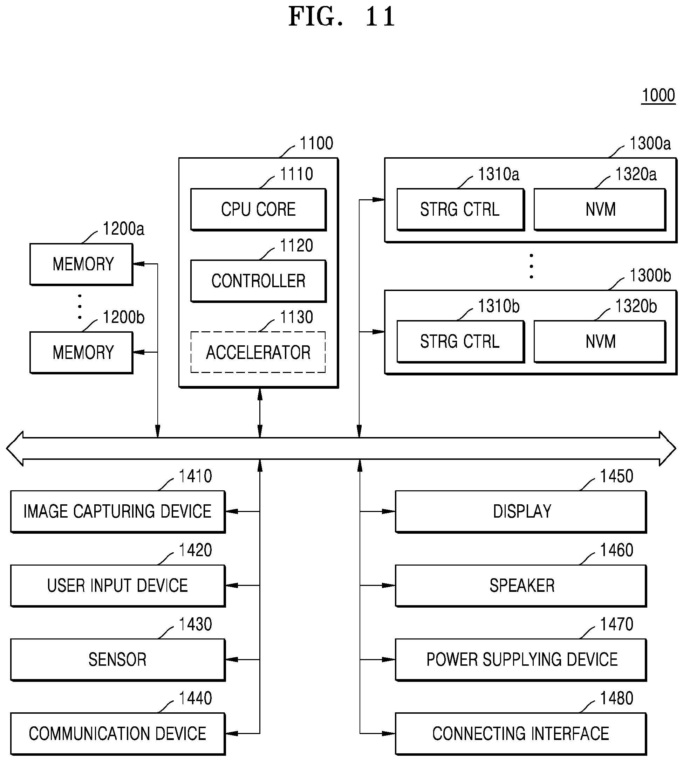

FIG. 11 is a diagram illustrating a system to which a storage device according to an example embodiment is applied.

A system 1000 of FIG. 11 may basically be a mobile system such as a mobile phone, a smartphone, a tablet PC, a wearable device, a healthcare device, or an Internet of things (IoT) device. However, the system 1000 of FIG. 11 is not necessarily limited to the mobile system, and may include an automotive device such as a PC, a laptop computer, a server, a media player, or a navigation.

Referring to FIG. 11, the system 1000 may include a main processor 1100, memories 1200a and 1200b, and storage devices 1300a and 1300b, and may further include one or more of an image capturing device 1410, a user input device 1420, a sensor 1430, a communication device 1440, a display 1450, a speaker 1460, a power supplying device 1470, and a connecting interface 1480.

The main processor 1100 may control overall operations of the system 1000, and more specifically, operations of other components constituting the system 1000. The main processor 1100 may be implemented as a general-purpose processor, a dedicated processor, or an application processor (AP).

The main processor 1100 may include one or more CPU cores 1110, and may further include a controller 1120 for controlling the memories 1200a and 1200b and/or the storage devices 1300a and 1300b. According to an embodiment, the main processor 1100 may further include an accelerator 1130, which is a dedicated circuit for high-speed data computation such as artificial intelligence (AI) data computation. The accelerator 1130 may include a graphics processing unit (GPU), a neural processing unit (NPU), and/or a data processing unit (DPU), and may be implemented as a separate chip physically independent from other components of the main processor 1100.

The memories 1200a and 1200b may be used as main memory devices of the system 1000 and may include volatile memory such as SRAM and/or DRAM, but may also include non-volatile memory such as flash memory, PRAM, and/or RRAM. The memories 1200a and 1200b may also be implemented in the same package as the main processor 1100.

The storage devices 1300a and 1300b may function as non-volatile storage devices storing data regardless of whether power is supplied, and may have a relatively large storage capacity compared to the memories 1200a and 1200b. The storage devices 1300a and 1300b may include storage controllers 1310a and 1310b and NVMs 1320a and 1320b storing data under control by the storage controllers 1310a and 1310b. The NVMs 1320a and 1320b may include flash memory having a 2D structure or a 3D vertical NAND (V-NAND) structure, but may include other types of non-volatile memory such as PRAM and/or RRAM.

The storage devices 1300a and 1300b may be included in the system 1000, by being physically separate from the main processor 1100 or implemented in the same package as the main processor 1100. In addition, each of the storage devices 1300a and 1300b may have a form such as a solid state drive (SSD) or a memory card, and may be detachably coupled to other components of the system 1000 through an interface such as the connecting interface 1480 to be described below. The storage devices 1300a and 1300b may include devices to which a standard protocol such as UFS, eMMC, or non-volatile memory express (NVMe) is applied, but are not limited thereto.

The main processor 1100 of the system 1000 of FIG. 11 may include the host device 100 described above with reference to FIG. 1 to FIG. 10. In addition, the memories 1200a and 1200b of the system 1000 of FIG. 11 may include the memory device 300 described above with reference to FIG. 1 to FIG. 10. In addition, the storage devices 1300a and 1300b of the system 1000 of FIG. 11 may include the storage device 200 described above with reference to FIG. 1 to FIG. 10.

The image capturing device 1410 may capture a still image or a moving image, and may include a camera, a camcorder, and/or a webcam.

The user input device 1420 may receive various types of data input from a user of the system 1000, and may include, for example, a touch pad, a keypad, a keyboard, a mouse, and/or a microphone.

The sensor 1430 may detect various types of physical quantities that may be obtained from the outside of the system 1000 and may convert the sensed physical quantities into electrical signals. The sensor 1430 may include a temperature sensor, a pressure sensor, an illumination sensor, a position sensor, an acceleration sensor, a biosensor, and/or a gyroscope sensor.

The communication device 1440 may transmit and receive signals to and from other devices outside the system 1000 according to various communication protocols. The communication device 1440 may include an antenna, a transceiver, and/or a modem MODEM.

The display 1450 and the speaker 1460 may function as output devices outputting visual information and auditory information, respectively, to the user of the system 1000.

The power supplying device 1470 may appropriately convert power supplied from a battery (not shown) built into the system 1000 and/or an external power source and may supply the converted power to each component of the system 1000.

The connecting interface 1480 may provide a connection between the system 1000 and an external device connected to the system 1000 to exchange data with the system 1000. The connecting interface 1480 may be implemented in various interface methods such as an ATA interface, an SATA interface, an e-SATA interface, an SCSI interface, an SAS interface, a PCI interface, a PCIe interface, an NVMe interface, IEEE 1394, a USB interface, an SD card interface, an MMC interface, an eMMC interface, a UFS interface, an eUFS interface, and a CF card interface.

According to an aspect of the inventive concept, the management circuit identifies an address of the data buffer in the buffer memory and caches the read data to be written to the data buffer in the cache memory.

According to an aspect of the inventive concept, the management circuit selects data to be cached in the cache memory from the read data based on a value of the offset field and a value of the number of lines field included in the cache read command.

According to an aspect of the inventive concept, the management circuit identifies an address of a completion queue in which the completion is stored in the buffer memory and caches the completion to be written to the completion queue in the cache memory.

According to another aspect of the inventive concept, there is provided a storage device including non-volatile memory, a storage controller configured to process a cache read command issued by a host device, and buffer memory including a completion queue to which a completion indicating a processing result of the cache read command is written. The storage controller includes a management circuit configured to cache the completion in cache memory in the host device by using a cache coherence protocol

According to another aspect of the inventive concept, the management circuit identifies an address of the completion queue in the buffer memory and caches the completion to be written to the completion queue in the cache memory.

According to another aspect of the inventive concept, the management circuit caches read data read from the non-volatile memory according to the cache read command in the cache memory by using the cache coherence protocol.

According to another aspect of the inventive concept, the management circuit identifies an address of a data buffer in which the read data is stored in the buffer memory and caches the read data to be written to the data buffer in the cache memory.

According to another aspect of the inventive concept, the cache read command comprises a logical block address (LBA) field, a type field, a size field, an offset field, and a number of lines field.

According to another aspect of the inventive concept, wherein the management circuit selects data to be cached in the cache memory from the read data based on a value of the offset field and a value of the number of lines field included in the cache read command.

According to another aspect of the inventive concept, wherein the cache read command further comprises a flag field, and wherein, when a value of the flag field is a first value, the management circuit caches at least part of the read data selected based on a value of the offset field and a value of the number of lines field included in the cache read command in the cache memory by using the cache coherence protocol and then, caches a completion indicating a processing result of the cache read command in the cache memory by using the cache coherence protocol.

While the inventive concept has been particularly shown and described with reference to embodiments thereof, it will be understood that various changes in form and details may be made therein without departing from the scope of the following claims.

## Claims

1. A storage device comprising:
non-volatile memory (220); and
a storage controller (210) configured to read read data from the non-volatile memory (220) and to write the read data to a memory device (300),
wherein the storage controller (210) comprises a management circuit (216) configured to cache the read data in cache memory (120) in a host device (100) by using a cache coherence protocol.

2. The storage device of claim 1, wherein the management circuit (216) is configured to identify an address of a data buffer (310) in which the read data is stored in the memory device (300) and cache the read data to be written to the data buffer (310) in the cache memory (120).

3. The storage device of claim 1 or claim 2, wherein the management circuit (216) is configured to cache the read data in the cache memory (120) by using the cache coherence protocol when a command fetched from the memory device (300) is a cache read command.

4. The storage device of claim 3, wherein the cache read command comprises a logical block address field, a type field, a size field, an offset field, and a number of lines field.

5. The storage device of claim 4, wherein the management circuit (216) is configured to select data to be cached in the cache memory (120) from the read data based on a value of the offset field and a value of the number of lines field included in the cache read command.

6. The storage device of any of claims 3-5, wherein the management circuit (216) is configured to cache the read data in the cache memory (120) in response to the cache read command and then cache a completion indicating a processing result of the cache read command in the cache memory (120) by using the cache coherence protocol.

7. The storage device of claim 6, wherein the management circuit (216) is configured to identify an address of a completion queue in which the completion is stored in the memory device (300) and cache the completion to be written to the completion queue in the cache memory (120).

8. The storage device of any preceding claim, wherein the cache coherence protocol comprises a compute express link protocol.

9. A storage device comprising:
non-volatile memory (220); and
a storage controller (210) configured to process a cache read command issued by a host device (100) and to write a completion indicating a processing result of the cache read command to an external memory device (300),
wherein the storage controller (210) comprises a management circuit (216) configured to cache the completion in cache memory (120) in the host device (100) by using a cache coherence protocol.

10. The storage device of claim 9, wherein the management circuit (216) is configured to identify an address of a completion queue in which the completion is stored in the memory device (300) and cache the completion to be written to the completion queue in the cache memory (120).

11. The storage device of claim 9, or claim 10 wherein the management circuit (216) is configured to cache read data read from the non-volatile memory (220) according to the cache read command in the cache memory (120) by using the cache coherence protocol.

12. The storage device of claim 11, wherein the management circuit (216) is configured to identify an address of a data buffer (310) in which the read data is stored in the memory device (300) and caches the read data to be written to the data buffer (310) in the cache memory.

13. The storage device of claim 11 or claim 12, wherein the cache read command comprises a logical block address field, a type field, a size field, an offset field, and a number of lines field.

14. The storage device of claim 13, wherein the management circuit (216) is configured to select data to be cached in the cache memory (120) from the read data based on a value of the offset field and a value of the number of lines field included in the cache read command.

15. The storage device of any of claims 9-14, wherein the cache coherence protocol comprises a compute express link protocol.
